# DEMANDE DE BREVET EUROPEEN

(11) **EP 0 883 273 A1**
(43) Date de publication de la demande: **09.12.1998**
(21) Numéro de dépôt: 98401347.4
(22) Date de dépôt: 05.06.1998
(51) Int. Cl.: H04M 1/57, H04M 19/08

(54) **Commutateur d'impédance**

(30) Priorité: 05.06.1997 FR 9706976
(71) Demandeur: MATRA NORTEL COMMUNICATIONS, 29000 Quimper (FR)
(72) Inventeur: Cariou, Bernard, 29000 Quimper (FR)
(74) Mandataire: Loisel, Bertrand

(57) **Abrégé**

Le commutateur d'impédance comprend deux transistors sensiblement identiques (Q1, Q2) ayant chacun une électrode de commande pour contrôler le passage du courant entre une première électrode et une seconde électrode. Les deux transistors sont montés en série et en opposition de part et d'autre d'une impédance d'adaptation (RE1, RE2). Chaque transistor a sa première électrode reliée à une borne respective (L1, L2) du commutateur d'impédance (9) par l'intermédiaire d'un condensateur d'isolement respectif (C1, C4), et sa seconde électrode reliée à l'impédance d'adaptation. Un même signal de commande (VC) est appliqué aux électrodes de commande des deux transistors.

## Description

La présente invention concerne un commutateur d'impédance, utilisable notamment dans un poste téléphonique pour adapter l'impédance du poste vis-à-vis de la ligne téléphonique, afin de permettre au poste de recevoir des données depuis le réseau sans être décroché.

Les opérateurs de réseau développent des services impliquant des transmissions de données vers les postes des abonnés alors que ces postes sont raccrochés. Parmi ces services, on peut citer ceux qui permettent d'identifier les appelants. Les informations transmises alors que le poste est raccroché comprennent dans ce cas le numéro d'annuaire de l'appelant.

L'envoi de ces informations est précédé d'un signal électrique (par exemple une sonnerie plus courte que la sonnerie d'appel), auquel le poste doit répondre par certaines opérations incluant une adaptation de son impédance vis-à-vis de la ligne afin de recevoir les informations dans de bonnes conditions.

En dehors de la phase de transmission de ces informations, cette impédance adaptée ne doit pas intervenir dans le fonctionnement du poste pour ne pas le perturber. Elle ne doit donc être commutée qu'en phase de réception de données.

Dans cette application, le commutateur d'impédance doit satisfaire les critères suivants :
a) adapter l'impédance du poste vis-à-vis de la ligne en phase de réception ;
b) présenter une forte impédance vis-à-vis de la ligne lorsqu'il n'est pas activé ;
c) ne pas prélever de courant continu sur la ligne ;
d) fonctionner sur des signaux alternatifs non polarisés ;
e) être bidirectionnel, c'est-à-dire accepter le passage du courant dans les deux sens ;
f) pouvoir supporter des tensions élevées en et hors service ; et
g) avoir un mode de commande simple.

Ces critères conduisent habituellement à réaliser le commutateur d'impédance à l'aide d'un relais électromécanique. Cette solution a l'inconvénient d'un coût élevé.

Un but de la présente invention est de réaliser un commutateur d'impédance qui réponde aux critères ci-dessus de manière efficace et économique.

L'invention propose ainsi un commutateur d'impédance comprenant deux transistors sensiblement identiques ayant chacun une électrode de commande pour contrôler le passage du courant entre une première électrode et une seconde électrode. Selon l'invention, ces deux transistors sont montés en série et en opposition de part et d'autre d'une impédance d'adaptation, chaque transistor ayant sa première électrode reliée à une borne respective du commutateur d'impédance par l'intermédiaire d'un condensateur d'isolement respectif, et sa seconde électrode reliée à l'impédance d'adaptation. Un même signal de commande est appliqué aux électrodes de commande des deux transistors.

Lorsque le signal de commande n'est pas activé, les deux transistors en opposition bloquent le passage du courant, de sorte que le commutateur présente une impédance très élevée vis-à-vis de ses deux bornes reliées à la ligne. Lorsque le signal de commande est activé et qu'un signal de courant alternatif est présenté sur la ligne, aux bornes du commutateur d'impédance, ce courant alternatif complète la polarisation de l'électrode de commande des deux transistors, l'un dans son mode de fonctionnement normal et l'autre en inversant les rôles de ses première et seconde électrodes.

Les transistors employés sont des transistors à haute tension. Ils peuvent être des transistors bipolaires ou des transistors à effet de champ de type MOS (Métal Oxyde Semi-conducteur).

D'autres particularités et avantages de la présente invention apparaîtront dans la description ci-après d'exemples de réalisation non limitatifs, en référence aux dessins annexés, dans lesquels :
- la figure 1 est un diagramme temporel illustrant la réponse d'un commutateur d'impédance selon l'invention ;
- la figure 2 est un schéma d'un commutateur d'impédance selon l'invention et de son environnement dans un poste téléphonique ; et
- la figure 3 est un schéma d'une variante de réalisation d'un commutateur d'impédance selon l'invention.

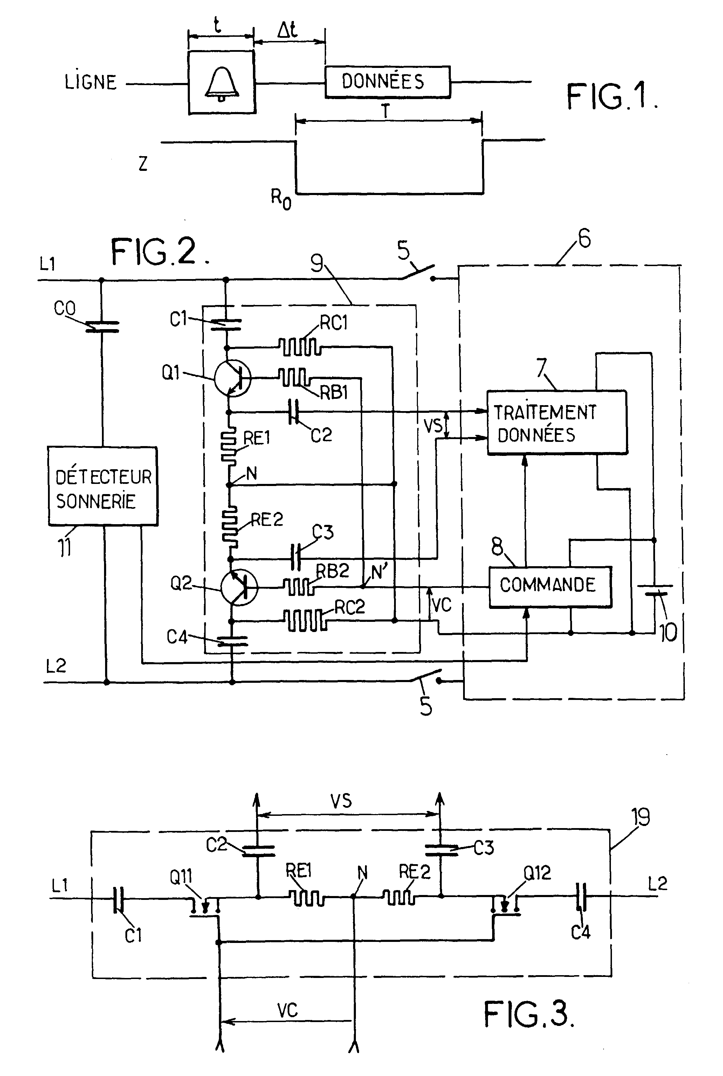

La première ligne de la figure 1 illustre schématiquement les signaux envoyés par un réseau téléphonique sur une ligne d'abonné dans le cadre de services effectués alors que le poste reste raccroché.

Un signal avertisseur, tel qu'une sonnerie de durée t plus courte que celle utilisée pour signaler un appel entrant (par exemple t=100 ms), est d'abord envoyé vers le poste pour le prévenir de la transmission de données de service après un temps de latence déterminé At. Pendant la période de réception de ces données, le poste doit présenter une impédance spécifiée R₀, par exemple de 1200 Ω, tandis qu'il doit présenter une haute impédance en dehors de ces périodes. Pour cela, il est utilisé un commutateur d'impédance commandé de manière à présenter l'impédance R₀ pendant une fenêtre de durée déterminée T calée après la réception du signal avertisseur de façon à couvrir la phase de réception des données.

Sur la figure 2, les références L1 et L2 désignent les deux conducteurs de la ligne téléphonique à laquelle est raccordé le poste d'abonné, la référence 5 désigne l'interrupteur de prise de ligne du poste (ouvert en position raccrochée, et fermé en position décrochée) qui peut être un interrupteur mécanique ou électronique, et la référence 6 désigne généralement les éléments du poste situés en aval de l'interrupteur de prise de ligne. Ces éléments 6 incluent une unité 7 de traitement des données de service en position raccrochée, une unité 8 de commande du commutateur d'impédance 9, et une source d'alimentation électrique 10. La source 10 peut être d'un type quelconque (pile, batterie, alimentation secteur...).

Un détecteur de sonnerie 11 est monté, en série avec un condensateur d'isolement C0, entre les conducteurs L1, L2 de la ligne téléphonique. Ce détecteur 11 prévient l'unité de commande 8 de la présence du signal de sonnerie sur la ligne. Lorsque ce signal de sonnerie est présent pendant la durée t, l'unité 8, après la temporisation appropriée, applique une tension de commande VC (tension continue positive) au commutateur d'impédance 9 pendant la fenêtre temporelle T. En dehors de cette fenêtre, la tension VC est à 0. L'unité de commande 8 active en outre l'unité de traitement de données 7 pendant la fenêtre T.

Le commutateur d'impédance 9 a une structure générale symétrique autour d'un noeud N porté à un potentiel de référence flottant par rapport à la ligne téléphonique. Ce potentiel de référence est par exemple celui de la borne négative de la source d'alimentation 10, comme représenté.

Le commutateur d'impédance 9 comporte deux transistors à haute tension Q1, Q2 qui, dans l'exemple de la figure 2, sont des transistors bipolaires de type npn. Les premières électrodes de ces deux transistors Q1, Q2, c'est-à-dire leurs collecteurs, sont respectivement reliés aux conducteurs L1, L2 de la ligne par l'intermédiaire de condensateurs d'isolement C1, C4. Entre les secondes électrodes des deux transistors Q1, Q2, c'est-à-dire leurs émetteurs, est connectée une impédance d'adaptation constituée par deux résistances RE1, RE2 de mêmes valeurs montées en série (RE1=RE2=R₀/2), le noeud N étant situé entre ces deux résistances. Le noeud N est d'autre part situé entre deux résistances supplémentaires RC1, RC2, de valeurs identiques et beaucoup plus grandes (par exemple plusieurs dizaines de kΩ) que celles des résistances RE1, RE2, connectées en série entre les collecteurs des transistors Q1, Q2. Les bases des deux transistors Q1, Q2 sont reliées entre elles par l'intermédiaire de deux résistances de polarisation identiques RB1, RB2. La tension de commande VC est appliquée par l'unité 8 entre le noeud N précité et le noeud N' situé entre les deux résistances RB1 et RB2.

La tension de sortie VS du commutateur d'impédance 9, fournie à l'unité 7 de traitement de données, est prélevée aux bornes de l'impédance d'adaptation R₀=RE1+RE2 par l'intermédiaire de condensateurs respectifs C2, C3.

En dehors de la fenêtre T, la tension de commande VC est à 0 de sorte que les transistors Q1, Q2 sont bloqués. Pendant la fenêtre T, la tension de commande VC injecte un courant de polarisation dans les bases des transistors, de façon que chaque transistor puisse conduire le courant dans un sens ou dans l'autre selon la polarité du signal apparaissant entre les conducteurs L1 et L2, l'impédance présentée par le poste vis-à-vis de la ligne ayant alors la valeur prescrite.

Le commutateur d'impédance entièrement électronique a ainsi un mode de commande particulièrement simple. On va maintenant examiner les critères mentionnés en introduction.
a) Lorsque les transistors sont conducteurs (VC>0), l'adaptation d'impédance du poste est réalisée : R₀=RE1+RE2 dans la branche où on prélève le signal VS porteur d'information.
b) Lorsque les transistors sont bloqués (VC=0), l'impédance vue entre les conducteurs et L2 est Z_{c1}+RC1+RC2+Z_{c4}, c'est-à-dire très grande compte tenu des valeurs élevées des résistances RC1 et RC2.
c) Les condensateurs C1 et C4 empêchent le passage du courant continu.
d) Le commutateur d'impédance ne fonctionne qu'avec des tensions alternatives qui seules peuvent franchir les condensateurs C1 et C4.
e) L'agencement du commutateur d'impédance étant sensiblement symétrique vis-à-vis de la ligne, il est bidirectionnel et accepte le passage du courant dans les deux sens.
f) Le commutateur d'impédance supporte des tensions élevées en et hors service car il présente à la ligne des jonctions collecteur-émetteur qui ont une forte tenue en tension (supérieure à 300 V).
g) Le commutateur d'impédance est activé simplement par un unique signal de tension continue.

Dans une variante avantageuse du montage, le condensateur d'isolement du détecteur de sonnerie 11 peut être constitué par l'un des condensateurs d'isolement C1, C4 du commutateur d'impédance 9 plutôt que par un condensateur séparé tel que le condensateur C0 représenté sur la figure 2.

Dans la variante de réalisation de la figure 3, le commutateur d'impédance 19 utilise des transistors MOS Q11, Q12 à la place des transistors bipolaires. La "première électrode" du transistor (reliée au condensateur d'isolement C1, C4) est alors constituée par son drain, et la "seconde électrode" (reliée à l'impédance d'adaptation) par sa source. Les autres éléments du commutateur 19 sont les condensateurs C1-C4 et les résistances RE1, RE2 agencées de la même manière que précédemment. Les résistances RC1 et RC2 ne sont pas nécessaires, de même que les résistances de polarisation RB1 et RB2, les transistors MOS Q11, Q12 étant commandés directement par la tension VC présentée par l'unité de commande entre le noeud central N et leurs grilles de commande.

## Revendications

1. Commutateur d'impédance, comprenant deux transistors sensiblement identiques (Q1, Q2 ; Q11, Q12) ayant chacun une électrode de commande pour contrôler le passage du courant entre une première électrode et une seconde électrode, caractérisé en ce que les deux transistors sont montés en série et en opposition de part et d'autre d'une impédance d'adaptation (RE1, RE2), chaque transistor ayant sa première électrode reliée à une borne respective (L1, L2) du commutateur d'impédance (9, 19) par l'intermédiaire d'un condensateur d'isolement respectif (C1, C4), et sa seconde électrode reliée à l'impédance d'adaptation, et en ce qu'un même signal de commande (VC) est appliqué aux électrodes de commande des deux transistors.

2. Commutateur d'impédance selon la revendication 1, dans lequel l'impédance d'adaptation consiste en des première et seconde résistances (RE1, RE2), de valeurs sensiblement identiques, reliées en série entre les secondes électrodes des transistors (Q1, Q2 ; Q11, Q12), et dans lequel le signal de commande (VC) est établi par rapport au potentiel du noeud (N) situé entre les première et seconde résistances.

3. Commutateur d'impédance selon la revendication 1 ou 2, dans lequel les deux transistors (Q1, Q2) sont des transistors bipolaires.

4. Commutateur d'impédance selon les revendications 2 et 3, dans lequel des troisième et quatrième résistances (RC1, RC2) , de valeurs sensiblement identiques et sensiblement supérieures à celles des première et seconde résistances (RE1, RE2), sont montées en série entre les premières électrodes des transistors (Q1, Q2) et de part et d'autre dudit noeud (N), et dans lequel le signal de commande est un signal de courant injecté dans les bases des transistors bipolaires (Q1, Q2) en appliquant une tension (VC) par rapport au potentiel dudit noeud.

5. Commutateur d'impédance selon la revendication 1 ou 2, dans lequel les deux transistors (Q11, Q12) sont des transistors à effet de champ.

6. Commutateur d'impédance selon les revendications 2 et 5, dans lequel le signal de commande est un signal de tension (VC) appliqué aux grilles des transistors à effet de champ (Q11, Q12) par rapport au potentiel dudit noeud (N).
